# EUROPÄISCHE PATENTSCHRIFT

(11) **EP 1 728 288 B1**
(45) Veröffentlichungstag und Bekanntmachung des Hinweises auf die Patenterteilung: **03.12.2008**
(21) Anmeldenummer: 05716984.9
(22) Anmeldetag: 10.03.2005
(51) Int. Cl.: H01M 2/30, H01M 2/34

(54) **ANORDNUNG MIT EINER BATTERIE**
SYSTEM PROVIDED WITH A BATTERY
ENSEMBLE COMPRENANT UNE BATTERIE

(30) Priorität: 23.03.2004 DE 102004014136
(43) Veröffentlichungstag der Anmeldung: 06.12.2006
(73) Patentinhaber: Continental Automotive GmbH, 30165 Hannover (DE)
(72) Erfinder: ROMBACH, Gerhard, 78098 Triberg (DE); BARTHOLOMÄUS, Ulf, 78112 St. Georgen (DE); BACIC, Helmut, 78126 Königsfeld (DE)
(86) Internationale Anmeldenummer: PCT/EP2005/051076
(87) Internationale Veröffentlichungsnummer: WO 2005/093878

(56) Entgegenhaltungen:
- DE-A1- 4 225 686
- DE-A1- 19 506 161
- US-A- 5 102 753

## Beschreibung

Die Erfindung betrifft eine Anordnung mit einer Batterie mit einem ersten Kontaktpol und einem zweiten Kontaktpol, einer ersten Anschlussleitung und einer zweiten Anschlussleitung, welche Anschlussleitungen jeweils ein erstes Ende und ein zweites Ende aufweisen, welche Anschlussleitungen jeweils einem Kontaktpol zugeordnet sind, mit diesem an einem ersten Ende in elektrisch leitender Verbindung stehen und an einem zweiten Ende mit einem Verbraucher kontaktierbar sind.

Derartige Anordnungen finden vielfach Anwendung als fest eingebaute Energiequellen kleinerer Elektrogeräte, bei denen die Energieverbrauche minimal sind. Auf diese Weise werden beispielsweise lückenlose Energieversorgungen für Uhren auch während eines Spannungsausfalles in Geräten sichergestellt, die ihre eigentliche Versorgungsspannung aus einem Stromversorgungsnetz beziehen, beispielsweise dem örtlichen Leitungsnetz oder der Spannungsversorgung im Kraftfahrzeug. Damit im Falle eines Spannungsausfalles, beispielsweise im Kraftfahrzeug, gewisse Funktionen von Geräten, beispielsweise die Uhrzeit in einem Fahrtschreiber, elektrisch abgepuffert sind, werden oben beschriebene Anordnungen mit einer Batterie in die entsprechenden Geräte mit einer voraussichtlichen betriebsartabhängigen Lebensdauer von etwa drei Jahren eingebaut. Eine derartige Abpufferung der Spannungsversorgung hat darüber hinaus den Vorteil, dass die Manipulationssicherheit erhöht wird, da die absichernde Funktion regelmäßig eine lückenlos intakte Energieversorgung voraussetzt. Herkömmliche Anordnungen mit einer Batterie bergen bei Einsatz in Nutzfahrzeugen, welche leicht entflammbare Gefahrgüter transportieren, die Gefahr der Explosion im Falle eines Kurzschlusses.

In der DE 195 06 161 A1 ist ein Batteriepaket offenbart, das eine wärmeempfindliche Abschaltvorrichtung und einen zu dieser parallel geschalteten Heizwiderstand aufweist. In dem Batteriepaket sind vier Batterien elektrisch in Reihe hintereinander angeordnet. Die Batterieflächen sind durch eine Außenummantelung umgeben, die mit Hilfe einer wärmegeschrumpften Röhre bebildet ist. Die Abschaltvorrichtung und der Heizwiderstand sind in einem zwischen der Außenummantelung und den Batterien gebildeten, wannenartigen Bereich angeordnet. Die Abschaltvorrichtung ist elektrisch in Reihe zu den Batterien zwischen den Batterien und einem Ladeanschluss angeordnet.

In der DE 42 25 686 A1 ist eine Schaltung zur Erkennung und Aufladung eines Akkupacks offenbart. Der Akkupack besteht aus einem Gehäuse, in dem eine Anzahl von Akkumulatoren angeordnet sind und in dem ferner ein temperaturabhängiger Widerstand oder ein Festwiderstand angeordnet ist.

In der US 5,102,753 A ist eine konstante Stromquelle umfassend eine Batterie mit festem Elektrolyt offenbart. Eine Transistor-Widerstands-Anordnung ist mit der Batterie elektrisch in Reihe geschaltet zum Bereitstellen eines konstanten Stroms von der Batterie.

Die Erfindung hat es sich daher zur Aufgabe gemacht, die Gefahr der Explosion bei Einsatz einer Anordnung mit einer Batterie eingangs genannter Art beim Einsatz in einem Gefahrguttransporter auf ein Minimum zu reduzieren.

Zur Lösung der erfindungsgemäßen Aufgabe wird vorgeschlagen, dass zwischen dem ersten Ende der Anschlussleitung, die dem ersten Kontaktpol zugeordnet ist und dem ersten Kontaktpol ein ohmscher Festwertwiderstand in elektrisch leitender Verbindung angeordnet ist. Der in elektrischer Reihenschaltung angeordnete ohmsche Festwertwiderstand zwischen dem ersten Kontaktpol und dem ersten Ende der Anschlussleitung sorgt dafür, dass im Falle eines dem ohmschen Festwiderstand nachgeordneten Kurzschlusses der maximale Strom auf Grund des Festwertwiderstandes unter allen Umständen begrenzt ist und auf diese Weise die von dem Kurzschluss erzeugte Wärme eine nur begrenzte Temperatur erzeugen kann. Bei zweckmäßiger Wahl des Widerstandswertes kann die von einem Kurzschluss verursachte Temperaturerhöhung so niedrig gehalten werden, dass keine Entzündung oder Explosion etwaig austretenden Gefahrgutes erfolqen kann.

Entscheidende Vorteile der erfindungsgemäßen Lösung sind die niedrigen Kosten der Eigensicherheit einer Spannungsquelle, die zusätzliche Sicherheit beim Handling, insbesondere im Rahmen der Montage und Lagerung der Batterie, die entfallenden Anforderungen an nachfolgende Stecksysteme und Schaltungsbereiche im Gerät, sowie die Kompatibilität zu bisherigen Batteriestecksystemen.

Damit es nicht zu einer unkontrollierten Lage des für die Sicherheit der Spannungsquelle so wichtigen Festwertwiderstandes kommt, weist die Batterie ein Gehäuse auf und das Gehäuse weist zwei gegenüberliegende Stirnseiten auf und an jeder Stirnseite des Gehäuses ist ein Kontaktpol angeordnet. Auf diese Weise sind die beiden Kontaktpole, zwischen denen einen direkte leitende Verbindung bzw. ein Kurzschluss zu vermeiden ist, möglichst weit voneinander entfernt. Um eine elektrisch leitende Verbindung zwischen den beiden Kontaktpolen ohne Zwischenschaltung des Festwertwiderstandes unter allen Umständen zu vermeiden, ist der Festwertwiderstand in dem Bereich zwischen den beiden von den Stirnseiten beschriebenen Ebenen an dem Gehäuse befestigt. Die Befestigung kann kostengünstig den Anforderungen an die Stabilität der Befestigung sowie die elektrische Isolation voll genügend mittels eines Schrumpfschlauches an dem Gehäuse erfolgen, wobei der Schrumpfschlauch das Gehäuse und den Festwertwiderstand gemeinsam ummantelt.

Eine besonders breite Anwendung der Erfindung ist gewährleistet, wenn es sich bei der Batterie um eine Zelle des Formats AA mit einer zylindrischen Form handelt, wobei der Festwertwiderstand an der zylindrischen Mantelfläche zwischen den beiden Stirnseiten angeordnet und befestigt ist. Bei manchen Anwendungen, insbesondere, wenn nur geringer Bauraum zur Verfügung steht, ist die Verwendung einer Batterie des Formats ½-AA sinnvoll.

Um einschlägigen Vorschriften zu genügen, ergibt sich bei einer Nennspannung der Batterie von 3,6 Volt ein zweckmäßiger Nennwert von 100 Ω für den Festwiderstand. Die Nennleistung des Festwiderstandes kann hierbei auf 250 mW dimensioniert werden, damit die Funktion unter allen Umständen aufrechterhalten bleibt. Auf diese Weise wird die Energiequelle vergleichsweise eigensicher, da die Erwärmung des Batteriekörpers im Falle des Kurzschlusses selbst bei einer Umgebungstemperatur von etwa 70 °C nicht größer als 10 K ausfällt. Je nach verwendetem Batterietyp kann die Nennkapazität zwischen 0,5-2,25 Ah liegen.

Die erfindungsgemäße Anordnung ist besonders kostengünstig bei der Verwendung eines Kohleschichtwiderstandes und erweist sich als besonders zuverlässig, wenn ein Metallschichtwiderstand verwendet wird.

Die Montage der erfindungsgemäßen Anordnung wird besonders einfach, wenn die Anschlussleitungen an einem zweiten Ende jeweils mit einem Stecker einer Steckverbindung elektrisch leitend verbunden sind.

Um zusätzlichen Anforderungen an die Sicherheit zu genügen, ist es sinnvoll, die Kontaktpole und die elektrische Kontaktierung an den Kontaktpolen gegen die Umgebung gesondert elektrisch zu isolieren. Steht beispielsweise der Kontaktpol aus einer Stirnfläche erhaben hervor, wie dies bei handelsüblichen Batterien häufig der Fall ist, ist es sinnvoll, den Bereich um den Kontaktpol mittels einer scheibenförmigen, insbesondere ringscheibenförmigen Isolation gegen die Umgebung elektrisch zu isolieren. Auf Grund der Abmessungen handelsüblicher Batterien erweist es sich als zweckmäßig, wenn der erste Kontaktpol der Batterie, an der der Festwertwiderstand kontaktiert, ein Minuspol ist. Zur besseren Handhabbarkeit der erfindungsgemäßen Anordnung können mit Vorteil die erste Anschlussleitung und die zweite Anschlussleitung abschnittsweise miteinander in nicht leitender Verbindung stehen.

Im Folgenden ist die Erfindung anhand eines speziellen Ausführungsbeispiels zur Verdeutlichung näher beschrieben. Neben diesem Ausführungsbeispiel ergeben sich für den Fachmann aus der hier beschriebenen Erfindung zahlreiche andere Möglichkeiten der Gestaltung. Insbesondere sind der Erfindung auch Merkmalskombinationen zuzurechnen, welche sich aus Kombinationen der Ansprüche ergeben, auch wenn kein ausdrücklicher dementsprechender Rückbezug angeführt ist. Es zeigen:

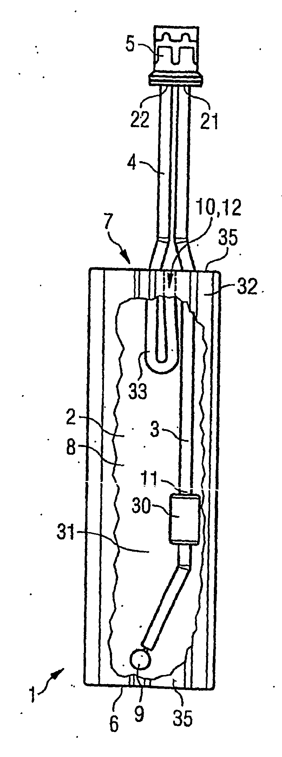

- Figur 1: eine schematische Darstellung einer erfindungsgemäßen Anordnung mit einer Batterie.

Die in Figur 1 dargestellte Anordnung 1 mit einer Batterie 2 umfasst im Wesentlichen noch eine erste Anschlussleitung 3 mit einem Festwiderstand 30 und eine zweite Anschlussleitung 4, die in einem gemeinsamen zweipoligen Stecker 5 münden. Ein Gehäuse 31 der Batterie 2 ist von zylindrischer Form mit einer ersten Stirnseite 6 und einer zweiten Stirnseite 7 sowie einer Mantelfläche 8. An den beiden Stirnseiten 6, 7 befindet sich jeweils ein Kontaktpol 9, 10. Der erste Kontaktpol 9 an der ersten Stirnseite 6 steht über einen Festwertwiderstand 30 mit dem ersten Ende 11 der ersten Anschlussleitung 3 in elektrisch leitender Verbindung. Der erste Kontaktpol 9 ist der Minuspol der Batterie 2. Der zweite Kontaktpol 10 befindet sich mit dem ersten Ende 12 der zweiten Anschlussleitung 4 in elektrisch leitender Verbindung, welche in einer kleinen Schleife 33 an dem Gehäuse 31 der Batterie 2 entlang geführt ist und anschließend sich parallel zu der ersten Anschlussleitung 3 in Richtung des Steckers 5 erstreckt. Die erste Anschlussleitung 3 und die zweite Anschlussleitung 4 sind mit ihren zweiten Enden 21, 22 an jeweils einem Pol des Steckers 5 einer nicht dargestellten Steckverbindung befestigt und elektrisch leitend kontaktiert. Der Festwiderstand 30 ist an der Mantelfläche 8 des Gehäuses 31 der Batterie 2 mittels eines Schrumpfschlauches 32 befestigt, wobei der Schrumpfschlauch gleichzeitig Abschnitte der Anschlussleitungen 3, 4, insbesondere die Schleife 33, an dem Gehäuse 31 fixiert und die Anordnung zusätzlich gegenüber der Umgebung isoliert. Stirnseitig ist die Batterie 2 jeweils mit einer Isolation 35 versehen.

## Patentansprüche

1. Anordnung (1) mit einer Batterie (2) mit einem ersten Kontaktpol (9) und einem zweiten Kontaktpol (10), einer ersten Anschlussleitung (3) und einer zweiten Anschlussleitung (4), welche Anschlussleitungen (3, 4) jeweils ein erstes Ende (11, 12) und ein zweites Ende (21, 22) aufweisen, welche Anschlussleitungen (3, 4) jeweils einem Kontaktpol (9, 10) zugeordnet sind, mit diesem an einem ersten Ende (11, 12) in elektrisch leitender Verbindung stehen und an einem zweiten Ende (21, 22) mit einem Verbraucher kontaktierbar sind und zwischen dem ersten Ende (11) der Anschlussleitung (3) die dem ersten Kontaktpol (9) zugeordnet ist und dem ersten Kontaktpol (9) ein ohmscher Festwertwiderstand (30) in elektrisch leitender Verbindung angeordnet ist und die Batterie (2) ein Gehäuse (31) aufweist, **dadurch gekennzeichnet, dass** das Gehäuse (31) zwei gegenüberliegende Stirnseiten (6, 7) aufweist und an jeder Stirnseite (6, 7) des Gehäuses (31) ein Kontaktpol (9) angeordnet ist und dass der Festwertwiderstand (30) in dem Bereich zwischen den beiden von den Stirnseiten (6, 7) beschriebenen Ebenen an dem Gehäuse (31) befestigt ist.

2. Anordnung (1) nach Anspruch 1, **dadurch gekennzeichnet, dass** der Festwertwiderstand (30) mittels eines Schrumpfschlauchs (32) an dem Gehäuse (31) befestigt ist.

3. Anordnung (1) nach Anspruch 1, **dadurch gekennzeichnet, dass** es sich bei der Batterie (2) um eine Zelle des Formats AA mit einer zylindrischen Form handelt, wobei der Festwertwiderstand (30) an der zylindrischen Mantelfläche (8) zwischen den beiden Stirnseiten (6, 7) angeordnet und befestigt ist.

4. Anordnung (1) nach Anspruch 1, **dadurch gekennzeichnet, dass** es sich bei der Batterie (2) um eine Zelle des Formats ½-AA mit einer zylindrischen Form handelt, wobei der Festwertwiderstand (30) an der zylindrischen Mantelfläche (8) zwischen den beiden Stirnseiten (6, 7) angeordnet und befestigt ist.

5. Anordnung (1) nach Anspruch 1, **dadurch gekennzeichnet, dass** die Batterie (2) eine Nennspannung von 3,6 V und der Festwertwiderstand (30) einen Nennwert von 100 Ω aufweist.

6. Anordnung (1) nach Anspruch 5, **dadurch gekennzeichnet, dass** der Festwertwiderstand (30) eine Nennleistung von 250 mW aufweist.

7. Anordnung (1) nach Anspruch 1, **dadurch gekennzeichnet, dass** die Batterie (2) eine Lithiumbatterie, insbesondere eine Thionylchlorid-System-Batterie ist.

8. Anordnung (1) nach Anspruch 1, **dadurch gekennzeichnet, dass** der Festwertwiderstand (30) als Metallschichtwiderstand oder als Kohleschichtwiderstand ausgebildet ist.

9. Anordnung (1) nach Anspruch 1, **dadurch gekennzeichnet, dass** die Anschlussleitungen (3) an einem zweiten Ende (11) jeweils mit einem Stecker (5) einer Steckverbindung elektrisch leitend verbunden sind.

10. Anordnung (1) nach Anspruch 1, **dadurch gekennzeichnet, dass** die Kontaktpole (9, 10) und die elektrische Kontaktierung an den Kontaktpolen (9, 10) gegen die Umgebung elektrisch isoliert ist.

11. Anordnung (1) nach Anspruch 1, **dadurch gekennzeichnet, dass** der erste Kontaktpol (9) der Batterie (2) ein Minuspol ist.

12. Anordnung (1) nach Anspruch 1, **dadurch gekennzeichnet, dass** die erste Anschlussleitung (3) und die zweite Anschlussleitung (4) abschnittsweise miteinander in nicht leitender Verbindung stehen.

## Claims

1. Arrangement (1) having a battery (2) with a first contact pole (9) and a second contact pole (10), having a first connecting line (3) and a second connecting line (4), which connecting lines (3, 4) each have a first end (11, 12) and a second end (21, 22), and are each associated with one contact pole (9, 10) to which they are electrically conductively connected at a first end (11, 12), and which connecting lines (3, 4) can make contact with a load at a second end (21, 22) and a nonreactive fixed-value resistor (30) is arranged such that it is electrically conductively connected between the first end (11) of the connecting line (3), which is associated with the first contact pole (9), and the first contact pole (9), **characterized in that** the housing (31) has two opposite end faces (6, 7), and one contact pole (9) is arranged on each end face (6, 7) of the housing (31), and **in that** the fixed-value resistor (30) is attached to the housing (31) in the area between the two planes which are described by the end faces (6, 7).

2. Arrangement (1) according to Claim 1, **characterized in that** the fixed-value resistor (30) is attached to the housing (31) by means of a shrink sleeve (32).

3. Arrangement (1) according to Claim 1, **characterized in that** the battery (2) is a cylindrical AA-format cell, with the fixed-value resistor (30) being arranged on and attached to the cylindrical casing surface (8) between the two end faces (6, 7).

4. Arrangement (1) according to Claim 1, **characterized in that** the battery (2) is a cylindrical ½-AA-format cell, with the fixed-value resistor (30) being arranged on and attached to the cylindrical casing surface (8) between the two end faces (6, 7).

5. Arrangement (1) according to Claim 1, **characterized in that** the battery (2) has a rated voltage of 3.6 V and the fixed-value resistor (30) has a rated value of 100 Ω.

6. Arrangement (1) according to Claim 5, **characterized in that** the fixed-value resistor (30) has a rated power of 250 mW.

7. Arrangement (1) according to Claim 1, **characterized in that** the battery (2) is a lithium battery, in particular a thionyl-chloride system battery.

8. Arrangement (1) according to Claim 1, **characterized in that** the fixed-value resistor (30) is in the form of a metal-film resistor or a carbon-film resistor.

9. Arrangement (1) according to Claim 1, **characterized in that** the connecting lines (3) are each electrically conductively connected at a second end (11) to a plug (5) of a plug connection.

10. Arrangement (1) according to Claim 1, **characterized in that** the contact poles (9, 10) and the electrical contact with the contact poles (9, 10) are electrically isolated from the environment.

11. Arrangement (1) according to Claim 1, **characterized in that** the first contact pole (9) of the battery (2) is a negative pole.

12. Arrangement (1) according to Claim 1, **characterized in that** the first connecting line (3) and the second connecting line (4) are non-conductively connected to one another in places.

## Revendications

1. Ensemble (1) comprenant une pile électrique (2) qui a un premier pôle de contact (9) et un deuxième pôle de contact (10), un premier conducteur de raccordement (3) et un deuxième conducteur de raccordement (4), lesdits conducteurs de raccordement (3, 4) comportant chacun une première extrémité (11, 12) et une deuxième extrémité (21, 22), lesdits conducteurs de raccordement (3, 4) correspondant chacun à un pôle de contact (9, 10), avec lequel ils sont en contact électrique à une première extrémité (11, 12), et pouvant être, à une deuxième extrémité (21, 22), mis en contact électrique avec un consommateur de courant et où, entre la première extrémité (11) du conducteur de raccordement (3) qui correspond au premier pôle de contact (9) et le premier pôle de contact (9), est placée, en connexion électrique, une résistance ohmique (30) à valeur fixe et où la pile électrique (2) comporte un boîtier (31), **caractérisé par le fait que** le boîtier (31) a deux faces de tranche (6, 7) se faisant face et que, sur chacune des faces de tranche (6, 7) du boîtier (31), se trouve un pôle de contact (9) et que la résistance à valeur fixe (30) est fixée au boîtier (31) dans la zone comprise entre les deux plans définis par les faces de tranche (6, 7).

2. Ensemble (1) selon la revendication 1, **caractérisé par le fait que** la résistance à valeur fixe (30) est fixée au boîtier (31) au moyen d'une gaine thermorétractable (32).

3. Ensemble (1) selon la revendication 1, **caractérisé par le fait que** la pile électrique (2) est une cellule de format AA de forme cylindrique, la résistance à valeur fixe (30) étant placée et fixée sur la surface cylindrique (8) de l'enveloppe entre les deux faces de tranche (6, 7).

4. Ensemble (1) selon la revendication 1, **caractérisé par le fait que** la pile électrique (2) est une cellule de format ½-AA de forme cylindrique, la résistance à valeur fixe (30) étant placée et fixée sur la surface cylindrique (8) de l'enveloppe entre les faces de tranche (6, 7).

5. Ensemble (1) selon la revendication 1, **caractérisé par le fait que** la pile électrique (2) a une tension nominale de 3,6 V et la résistance à valeur fixe (30), une valeur nominale de 100 Ω.

6. Ensemble (1) selon la revendication 5, **caractérisé par le fait que** la résistance à valeur fixe (30) a une puissance nominale de 250 mW.

7. Ensemble (1) selon la revendication 1, **caractérisé par le fait que** la pile électrique (2) est une pile au lithium, notamment une pile au chlorure de thionyle.

8. Ensemble (1) selon la revendication 1, **caractérisé p a r le fait** que la résistance à valeur fixe (30) est conçue sous forme de résistance à couches métalliques ou de résistance à couches de carbone.

9. Ensemble (1) selon la revendication 1, **caractérisé par le fait que** chaque conducteur de raccordement (3) est relié électriquement par sa deuxième extrémité (11) à une fiche (5) d'un connecteur enfichable.

10. Ensemble (1) selon la revendication 1, **caractérisé par le fait que** les pôles de contact (9, 10) et le point de mise en contact électrique sur les pôles de contact (9, 10) sont isolés électriquement par rapport à leur environnement.

11. Ensemble (1) selon la revendication 1, **caractérisé par le fait que** le premier pôle de contact (9) de la pile électrique (2) est un pôle négatif.

12. Ensemble (1) selon la revendication 1, **caractérisé par le fait que** le premier conducteur de raccordement (3) et le deuxième conducteur de raccordement (4) sont liés l'un à l'autre sur une partie de leur longueur, sans contact électrique.
